Europäisches Patentamt

European Patent Office

Office européen des brevets

(11) Veröffentlichungsnummer: **0 451 506 A1**

## (12) EUROPÄISCHE PATENTANMELDUNG

(21) Anmeldenummer: 91103464.3

(22) Anmeldetag: 07.03.91

(51) Int. Cl.5: **A01D 34/66**, A01D 34/76

(30) Priorität: 11.04.90 DE 9004204 U

(43) Veröffentlichungstag der Anmeldung:
16.10.91 Patentblatt 91/42

(84) Benannte Vertragsstaaten:
**DE DK FR NL**

(71) Anmelder: **Fella-Werke GmbH**
**Fellastrasse 2**
**W-8501 Feucht(DE)**

(72) Erfinder: **Pürrer, Josef**
**A.-Schramm-Str. 33**
**W-8501 Feucht(DE)**

(74) Vertreter: **Patentanwälte Czowalla . Matschkur**
**+ Partner**
**Dr.-Kurt-Schumacher-Strasse 23 Postfach**
**9109**
**W-8500 Nürnberg 11(DE)**

(54) **Rotationsmähwerk.**

(57) Rotationsmähwerk mit Antrieb unter den Schneidscheiben und einer an einem Getriebebalken mit der Hauptantriebswelle gelagerten Getriebeeinheit für jede Schneidscheibe, wobei die Lagerstellen für das Schneidscheibenritzel (21), für eine Zwischenwelle (14) und für die Hauptantriebswelle (6) in einem einstückigen Gehäusearm (12) angeordnet sind und dieser an dem Getriebebalken angeflanscht ist.

FIG. 3

Die Erfindung richtet sich auf ein Rotationsmähwerk mit Antrieb unter den Schneidscheiben und einer an einem Getriebebalken mit der Hauptantriebswelle gelagerten Getriebeeinheit für jede Schneidscheibe.

Bei den sehr weit verbreiteten Rotationsmähwerken mit Mähtrommeln werden diese von einem über den Trommeln liegenden Getriebekasten aus angetrieben. Wegen dieser Anordnung des obenliegenden Getriebekastens ergeben sich insbesondere bei hochwüchsigem Erntegut vielfach Durchflußprobleme, die den Betrieb erheblich erschweren können. Diese Schwierigkeiten sind bei Rotationsmähwerken mit von unten angetriebenen Schneidscheiben unbekannt. Dagegen bereitet bei diesen Mähwerken die Dimensionierung des unter den Mähscheiben befindlichen Antriebsbalkens erhebliche konstruktive Schwierigkeiten. Zum einen soll das Erntegut möglichst tief abgeschnitten werden, zum anderen aber behindert eine zu diesem Zweck relativ steil angestellte Mähscheibe das einwandfreie Abfließen des geschnittenen Mähguts. In der Praxis hat man deshalb, um Bauhöhe zu sparen, den Getriebebalken entsprechend niedrig gestaltet und mit sehr flachen Stirnrädern besetzt. Diese sind allerdings sehr empfindlich. Andererseits liegt bei dieser Ausbildung die Vorderkante des Getriebebalkens im Verhältnis zu den Messerschnittkreisen weit vorn. Bei steinigem Boden kann es deshalb vorkommen, daß Steine zwischen die Balkenvorderkante und das Schneidmesser gelangen und eine Verklemmung herbeiführen. Man ist diesem Problem mit einem vergleichsweise breiten Getriebebalken begegnet, bei dem sich im hinteren Teil die Antriebsstirnräder befinden und die Messerscheiben in nach vorn weisenden Ausbuchtungen gelagert sind. Hierdurch wird die Schwierigkeit mit der Vorderkante des Getriebekastens vermieden, jedoch behindert die breite rückwärtige Fläche den Abfluß des Mähgutes.

Die NL-OS 186 646 offenbart eine abweichende Form eines unmittelbar unter den Mähscheiben geführten Antriebs mit einzelnen Kegelradgetrieben. Diese Konstruktion ist infolge der wenigen in gegenseitigem Eingriff befindlichen Zähne stabil und vergleichsweise geräuscharm. Auch kommt eine störende Balkenvorderkante in Fortfall, doch baut eine solche Antriebsform vergleichsweise hoch, was wiederum einen steilen Anstellwinkel der Messerscheiben erfordert, der den ungehinderten Abfluß des Mähgutes beeinträchtigt.

Bei Frontmähwerken, die mit der ganzen Breite des Mähbalkens im anstehenden Mähgut fahren, hat sich diese Bauform dieses von der Zapfwelle des Schleppers im allgemeinen über einen Keilriementrieb angetriebenen Hauptgetriebes nicht bewährt. Das Getriebe befindet sich auf dem Getriebebalken neben der ersten Schneidscheibe und drückt infolgedessen beim Mähen im vollen Bestand das noch ungemähte Gut nieder. Es behindert darüber hinaus den Abfluß des gemähten Gutes und gibt zu Verstopfungen Anlaß. Ordnet man nun das Hauptgetriebe unmittelbar auf der senkrechten Welle der ersten Schneidscheibe an, muß diese die Antriebsleistung für alle folgenden Schneidscheiben übernehmen. Dies führt zu einer erheblichen einseitigen Beanspruchung. Wird das Hauptgetriebe hinter der ersten Mähscheibe angeordnet, vermeidet man zwar den Eingriff in das anstehende Halmgut, doch bleibt die Überbelastung des Getriebes der ersten Mähscheibe erhalten. Andererseits ist diese Maßnahme besonders bei Stirnradantrieben konstruktiv aufwendig und kompliziert. Wesentlich besser ist dagegen die Ausführungsform eines Mähwerks nach FR-PS 74 42 349 und 76 39 195. An einem weit hinten liegenden Antriebsbalken mit hinter der ersten Mähscheibe liegendem Hauptgetriebe sind Pendelarme angebracht, die am vorderen Ende die Messerscheiben tragen, während die Antriebselemente im Antriebsbalken und im Pendelarm liegen. Jeder einzelne Pendelarm kann mittels eines Hydraulikzylinders in eine obere Transportlage gebracht werden. Durch diese Ausbildung werden alle o.g. Nachteile vermieden. Dagegen ergibt sich aber eine unverhältnismäßig aufwendige, teure und damit für die Praxis unwirtschaftliche Konstruktion. Das Problem ist deshalb darin zu sehen, eine ebenfalls die zahlreichen Nachteile bekannter Konstruktionen vermeidende Ausführung eines Rotationsmähwerks zu finden, die darüber hinaus aber eine praktikable und kostengünstige konstruktive Ausführung gestattet.

Diese Aufgabe löst die Erfindung bei einem Mähwerk der eingangs beschriebenen Gattung dadurch, daß die Lagerstellen für das Schneidscheibenritzel, für eine Zwischenwelle und für die Hauptantriebswelle in einem einstückigen Gehäusearm angeordnet und dieser an dem Getriebebalken angeflanscht ist. Der Getriebearm dient zwar nach wie vor der Führung der Hauptantriebswelle, ohne aber die Lagerfunktion zu übernehmen. Diese Aufgabe übernimmt der Gehäusearm der einzelnen Schneidscheiben, zu welchem Zweck diese Gehäusearme in die Flanschöffnung des Getriebearms eingreifen. Die erfindungsgemäße Ausführung gestattet eine besonders kurze Bauform der einzelnen dem Getriebebalken vorgesetzten Schneidwerke, und diese ist deshalb konstruktiv einfach und infolgedessen kostengünstig herzustellen, weil der Gehäusearm den gesamten Antrieb mit Ausnahme der Hauptantriebswelle selbst, jedoch deren Lagerung aufnimmt. Dieser Gehäusearm kann infolgedessen als selbständige Baueinheit gefertigt werden. Er wird dann lediglich an den Getriebebalken angeflanscht und mit der Antriebswelle verbunden.

Diese Anordnung baut verhältnismäßig flach, so daß auch ein übermäßig steiler Anstellwinkel vermieden wird. Zum anderen wird der Transport des geschnittenen Gutes über den Getriebebalken hinweg nicht behindert.

Zu diesem Zweck kann bei einer besonders vorteilhaften Ausführungsform der Erfindung der Winkel zwischen den Achsen der Zwischenwelle und des Schneidscheibenritzels 90° oder etwas mehr betragen. Der Gehäusearm kann dann etwa horizontal geführt werden, während die Schneidscheibenanordnung einen leicht ansteigenden Anstellwinkel erhält.

Als besonders vorteilhaft erweist sich die erfindungsgemäße Bauform dadurch, daß die Zwischenwelle zwischen Hauptantriebswelle und Schneidscheibenritzel schwimmend gelagert werden kann.

Es liegt im Rahmen der Erfindung, daß an dem Gehäusearm und/oder dem Getriebebalken die Schneidscheiben untergreifende Steinschutzplatten befestigt werden können. Dieser Vorteil ergibt sich durch die vergleichsweise kurze Bauart des die Antriebseinheit aufnehmenden Gehäusearms. Sind diese Steinschutzplatten auch noch aneinander befestigt bzw. untereinander verbunden, bilden sie gewissermaßen mit dem Getriebebalken und/oder den verschiedenen Gehäusearmen eine Baueinheit, die nicht nur die Steinschutzplatten verstärkt, sondern auch das Widerstandsmoment des Getriebebalkens selbst wesentlich vergrößert. Die gegenüber den Getriebebalken nach vorn ragenden Getriebeeinheiten bieten die Möglichkeit, die Steinschutzplatten weit auszuschneiden. Hierdurch ergibt sich ein wesentlich vergrößerter Freiraum zwischen den Mähscheiben sowie zwischen den Schnittpunkten der Messerumlaufbahnen und den dahinterliegenden Kanten der Steinschutzbleche.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:

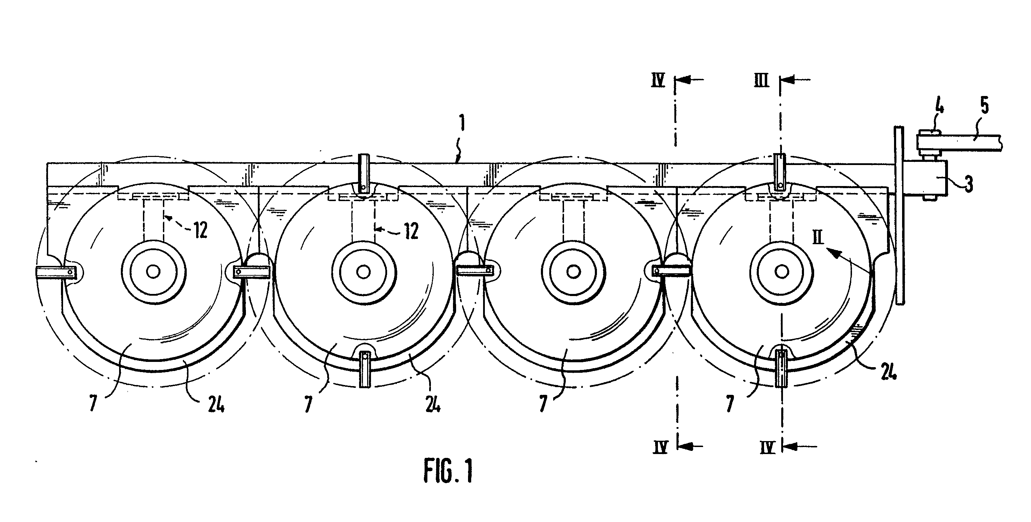

Fig. 1    eine Draufsicht auf den vereinfacht wiedergegebenen Mähbalken;

Fig. 2    die perspektivische Darstellung des Mähbalkens mit einem Gehäusearm;

Fig. 3    einen Schnitt etwa nach Linie III - III in Fig. 1;

Fig. 4    einen Schnitt etwa nach Linie IV - IV in Fig. 1 und

Fig. 5    eine Draufsicht auf den Mähbalken.

Der in der Zeichnung wiedergegebene Mähbalken eines Rotationsmähwerks weist einen Getriebebalken 1 auf, der aus einem Hohlprofil 2 besteht, welches sich über die gesamte Länge des Schneidwerks erstreckt. An dem schlepperseitigen Ende dieses Getriebebalkens 1 sitzt das Hauptgetriebe 3 mit einer Keilriemenscheibe 4, die über einen Keilriementrieb 5 mit dem Zapfwellenanschluß des Schleppers in Antriebsverbindung steht. Innerhalb des Hohlprofils 2 ist die Sechskant-Antriebswelle 6 geführt, von der der Antrieb zu den bei der in der Zeichnung wiedergegebenen Ausführungsform vier Schneidscheiben 7 abgenommen wird. An der Vorderseite 8 ist das Hohlprofil 2 mit einer der Anzahl der Schneidscheiben 7 entsprechenden Zahl von Flanschöffnungen 9 und entsprechenden Flanschflächen 10 versehen. Diese dienen zum Anschluß je einer Flanschplatte 11 eines kurzen Gehäusearms 12, der die Antriebsübertragung von der Hauptantriebswelle 6 zu der Schneidscheibe 7 aufnimmt. Er ist winkelförmig gestaltet. In dem längs verlaufenden Kanal 13 ist eine kurze Zwischenwelle 14 mit den beiden Lagern 15 gelagert. Über die Flanschplatte 11 nach außen hinaus ragt ein Fortsatz 16, der das Lager 17 für die Hauptantriebswelle 6 trägt.

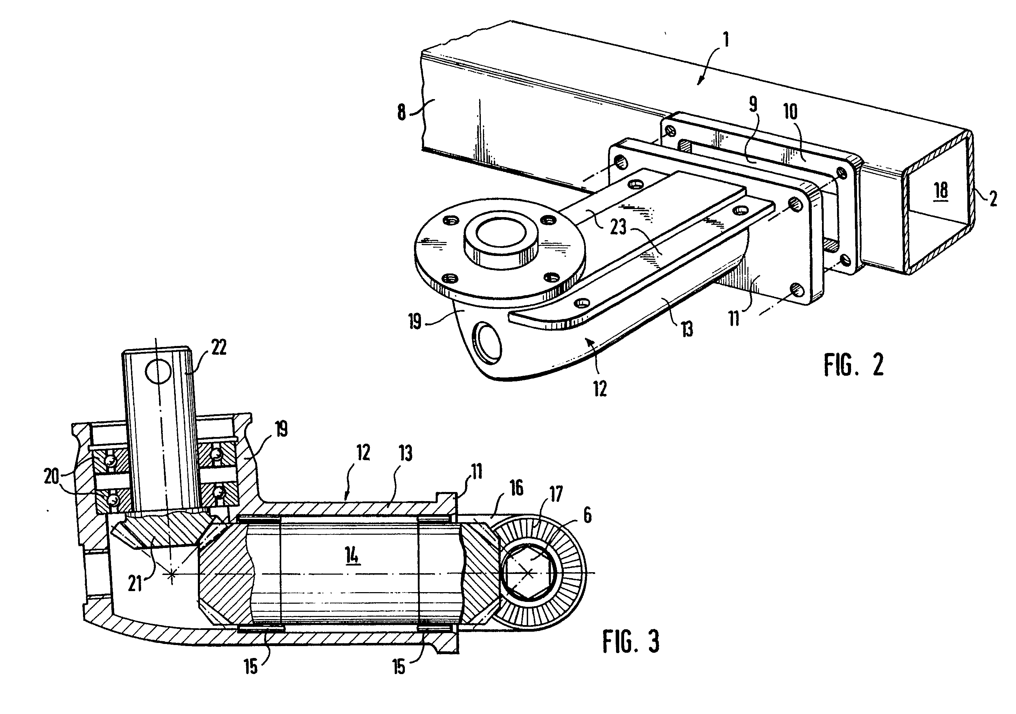

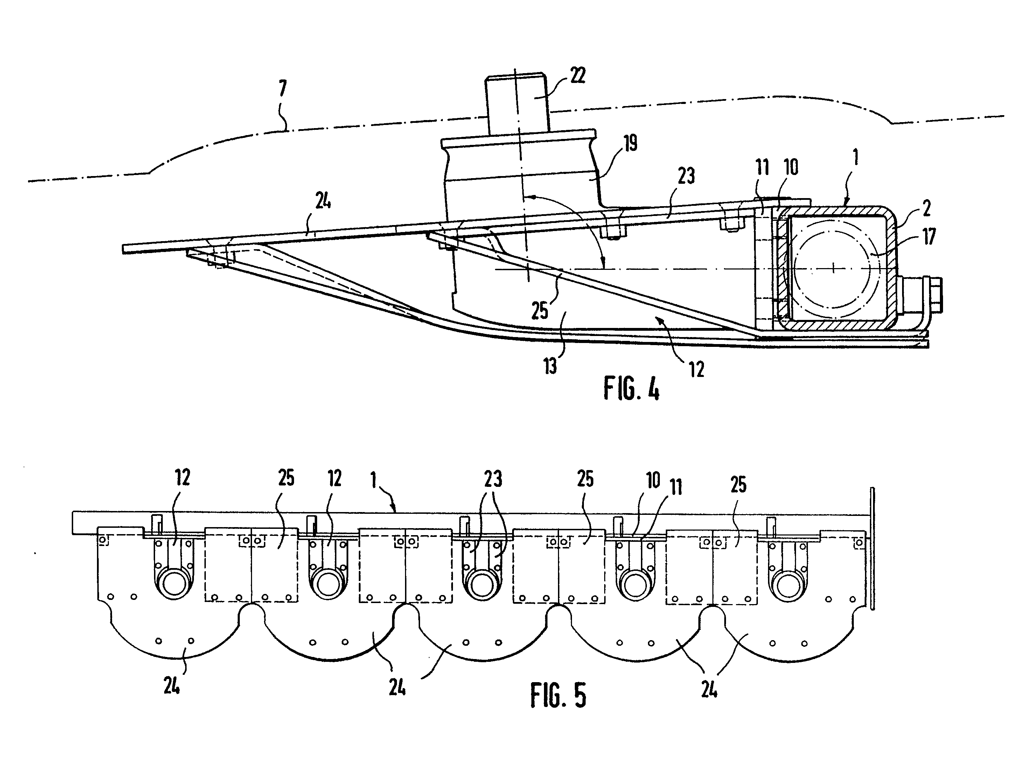

Dieser Fortsatz 16 greift beim Zusammenbau des Gehäusearms 2 mit dem Getriebebalken 1 in den Innenraum 18 des Hohlprofils 2 ein. An den Kanal 13 ist ein aufrecht ragender Kanal 19 angewinkelt. Der Winkel zwischen den Achsen der beiden Kanalstücke 13 u. 19 beträgt, wie die Fig. 3 und 4 erkennen lassen, etwas mehr als 90°. Der Kanalstutzen 19 nimmt die Lager 20 für einen das Schneidscheibenritzel 21 tragenden Wellenstumpf 22 auf, an dessen freien Ende die Schneidscheibe befestigt ist.

Der Gehäusearm 12 ist oberseitig abgeflacht und mit zwei seitlichen Flügeln 23 versehen, die bei der wiedergegebenen Ausführungsform zur Befestigung der steinschutzplatten 24 dienen. Diese sind außerdem durch eine Platte 25 und entsprechende Verschraubungen miteinander und mit dem Hohlprofil 2 des Getriebebalkens 1 verbunden, so daß sich eine erhebliche Versteifung ergibt.

**Patentansprüche**

1. Rotationsmähwerk mit Antrieb unter den Schneidscheiben und einer an einem Getriebebalken mit der Hauptantriebswelle gelagerten Getriebeeinheit für jede Schneidscheibe, dadurch gekennzeichnet, daß die Lagerstellen für das Schneidscheibenritzel (21), für eine Zwischenwelle (14) und für die Hauptantriebswelle (6) in einem einstückigen Gehäusearm (12) angeordnet sind und dieser an dem Getriebebalken (1) angeflanscht ist.

2. Rotationsmähwerk nach Anspruch 1, dadurch gekennzeichnet, daß die Getriebeeinheiten vom Getriebebalken (1) nach vorne ragen, so daß zwischen den Schnittpunkten der Umlaufbahnen benachbarter Schneidscheiben (7) und den dahinter liegenden Kanten der Steinschutzplatten (24) ein großer Freiraum entsteht.

3. Rotationsmähwerk nach Anspruch 1 und 2, dadurch gekennzeichnet, daß der Winkel zwischen den Achsen der zwischenwelle (14) und des Schneidscheibenritzels (21) 90° oder mehr beträgt.

4. Rotationsmähwerk nach den vorherigen Ansprüchen, dadurch gekennzeichnet, daß die Zwischenwelle (14) schwimmend in dem Gehäusearm (12) gelagert ist.

5. Rotationsmähwerk nach mindestens einem der Ansprüche 1 bis 4, dadurch gekennzeichnet, daß an dem Gehäusearm (12) und/oder dem Getriebebalken (1) die Schneidscheiben (7) untergreifende steinschutzplatten (24) befestigt sind.

6. Rotationsmähwerk nach Anspruch 5, dadurch gekennzeichnet, daß die Steinschutzplatten (24) aneinander befestigt sind.

7. Rotationsmähwerk nach den vorherigen Ansprüchen, dadurch gekennzeichnet, daß der Getriebebalken (1) und die angeflanschten Getriebeeinheiten eine gemeinsame Ölversorgungseinrichtung aufweisen.

FIG. 1

EP 0 451 506 A1

FIG. 2

FIG. 3

EP 0 451 506 A1

FIG. 4

FIG. 5

EP 0 451 506 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | EP-A-0 070 585   (MULTINORM B.V.)<br>* Seite 3, Zeile 37 - Seite 4, Zeile 30; Ansprüche 4-6, 9, 10; Figuren 1, 4 *<br>— — — | 1-5,6 | A 01 D 34/66<br>A 01 D 34/76 |
| A,D | FR-A-2 294 625   (GARNIER S.A.)<br>* Ansprüche 10, 11, 15, 16; Figuren 1-3 *<br>— — — | 1-3 | |
| A | DE-A-2 445 178   (C. VAN DER LELY N.V.)<br>* Seite 3, Absatz 1 - Seite 10, Absatz 1; Figuren 2-4 *<br>— — — | 1,2 | |
| A | DE-A-1 782 829   (ASSING S.A.)<br>* Seiten 3 - 4; Figuren 2, 3 *<br>— — — | 1,2 | |
| A,D | FR-A-2 374 838   (SOC. NOUVELLE DES ETS. THOMAS)<br>* Figur 3 *<br>— — — — — | 1,2 | |

**RECHERCHIERTE SACHGEBIETE (Int. Cl.5)**

A 01 D

Der vorliegende Recherchenbericht wurde für alle Patentansprüche erstellt

| Recherchenort | Abschlußdatum der Recherche | Prüfer |
|---|---|---|
| Berlin | 15 April 91 | MERCKX A M |